# EUROPÄISCHE PATENTSCHRIFT

(11) **EP 1 474 321 B1**
(45) Veröffentlichungstag und Bekanntmachung des Hinweises auf die Patenterteilung: **20.08.2008**
(21) Anmeldenummer: 02791761.6
(22) Anmeldetag: 03.12.2002
(51) Int. Cl.: B60T 17/22, B60T 13/52

(54) **VERFAHREN ZUR ERMITTLUNG ODER KALIBRIERUNG DER AUSSTEUERUNGSKENNLINIE EINES UNTERDRUCKBREMSKRAFTVERSTÄRKERS**
METHOD FOR DETERMINING OR CALIBRATING THE BRAKE CONTROL CHARACTERISTIC OF A VACUUM BRAKE BOOSTER
PROCEDE POUR DETERMINER OU ETALONNER LA COURBE CARACTERISTIQUE DE REGLAGE D'UN SERVOFREIN A DEPRESSION

(30) Priorität: 07.02.2002 DE 10205171; 07.02.2002 DE 10205172; 26.09.2002 DE 10244761
(43) Veröffentlichungstag der Anmeldung: 10.11.2004
(73) Patentinhaber: Continental Teves AG & Co. oHG, 60488 Frankfurt am Main (DE)
(72) Erfinder: GRONAU, Ralph, 35083 Wetter (DE); REVIOL, Ralf, 63128 Dietzenbach-Steinberg (DE); SCHELLER, Tobias, 65931 Frankfurt am Main (DE); NEU, Andreas, 76773 Kuhardt (DE)
(86) Internationale Anmeldenummer: PCT/EP2002/013642
(87) Internationale Veröffentlichungsnummer: WO 2003/066405

(56) Entgegenhaltungen:
- EP-A- 0 827 887
- FR-A- 2 817 225
- US-A1- 2001 002 767
- US-B1- 6 318 815

## Beschreibung

Die Erfindung betrifft ein Verfahren zur Ermittlung oder Kalibrierung der Aussteuerungskennlinie eines Unterdruckbremskraftverstärkers einer Fahrzeugbremsanlage, wobei der Druck in der Arbeitskammer oder der Druckunterschied zwischen der Arbeitskammer und der Unterdruckkammer des Unterdruckbremskraftverstärkers ermittelt wird und auf Grundlage des ermittelten Drucks oder Druckunterschieds des Unterdruckbremskraftverstärkers die Aussteuerungskennlinie ermittelt wird oder eine vorgegebene oder gespeicherte Aussteuerungskennlinie nach Maßgabe des ermittelten Drucks oder Druckunterschieds verändert bzw. korrigiert wird.

Der Bremsdruck resultiert aus der Pedalkraft und der Hilfskraft, welche sich aus der Druckdifferenz zwischen der Arbeitskammer und der Vakuumkammer (Unterdruckkammer) des Unterdruckbremskraftverstärkers ergibt. Der Hilfskraftanteil nimmt dabei entsprechend einem konstruktiv festgelegten Verstärkungsfaktor bis zum Aussteuerpunkt stetig zu. Im Aussteuerpunkt ist die maximale Druckdifferenz erreicht. Eine weitere Steigerung der Ausgangskraft ist nur durch eine ungewohnte Erhöhung der Bremsbetätigungskraft, insbesondere der Pedalkraft, möglich. Der Aussteuerpunkt liegt bei einem bestimmten hydraulischen Druck (Aussteuerdruck) eines dem Unterdruckbremskraftverstärker nachfolgenden Hauptbremszylinders.

Unter dem Begriff "Aussteuerungskennlinie" ist hier und im folgenden eine Kennlinie eines Unterdruckbremskraftverstärkers zu verstehen, welche den Zusammenhang zwischen einem in der Vakuumkammer bzw. Unterdruckkammer des Unterdruckbremskraftverstärkers herrschenden Vakuum bzw. Unterdruck und einem/einer resultierenden, unter den gegebenen Bedingungen maximalen Bremsdruck oder einer maximalen Bremskraft (Aussteuerdruck bzw. Aussteuerkraft) darstellt.

Die Unterdruckversorgung für den Unterdruckbremskraftverstärker erfolgt in der Regel von einem Antriebsmotor (Verbrennungsmotor). Ist die maximal erreichbare Unterstützungskraft durch eine nur schwache Unterdruckversorgung zu gering, was im Zuge neuer Motorentechnik, wie z.B. Benzin-Direkteinspritzer oder Dieselmotoren immer stärker der Fall ist, dann wird eine zusätzliche Bremskraftunterstützung erforderlich. Eine Möglichkeit zur Erzeugung einer zusätzlichen Bremskraft bzw. eines Zusatz-Bremsdrucks ist der Einsatz einer "aktiven" hydraulischen Bremskraftunterstützung. Dies wird z.B. mittels einer hydraulischen Pumpe erreicht. Der hydraulische Druck, der im hydraulischen Radbremszylinder aus der vom Fahrer über das Bremspedal eingesteuerten, mittels Unterdruckbremskraftverstärker verstärkten Bremskraft resultiert, wird dabei von der hydraulischen Pumpe zusätzlich erhöht. Diese Pumpe wird von einem Elektromotor angetrieben, der von einer elektronischen Bremsenregelungseinheit angesteuert wird.

Bei derartigen Systemen ist es notwendig, die Aussteuerungskennlinie und den Aussteuerpunkt des Unterdruckbremskraftverstärkers zu ermitteln. Denn dieser Punkt bestimmt den Übergabepunkt zwischen der Bremskraftunterstützung durch Unterdruck und der Unterstützung durch die hydraulische Pumpe. Die Aussteuerungskennlinie und der Aussteuerpunkt bzw. Aussteuerdruck sind dabei von verschiedenen Parametern abhängig, wie Membranfläche des Unterdruckbremskraftverstärkers, Unterdruckniveau und Hauptzylinderfläche. Aufgrund von z.B. Toleranzen der beteiligten Bauelemente ist es problematisch, eine hinreichend genaue Aussteuerungskennlinie und einen genauen Aussteuerpunkt oder Aussteuerdruck festzulegen.

Es ist an sich bekannt, Drucksensoren in/an Unterdruckbremskraftverstärkern einzusetzen, um eine Druckdifferenz zwischen der Unterdruckkammer oder Vakuumkammer und der Arbeitskammer zu erfassen und auszuwerten.

In der DE 44 36 297 C2 ist ein Unterdruckbremskraftverstärker und ein Verfahren zum Betrieb einer Fahrzeugbremsanlage offenbart, bei dem die erfasste Druckdifferenz zur Ansteuerung eines Steuerventils im Unterdruckbremskraftverstärker ausgewertet wird.

In der DE 197 29 158 C2 ist ein Unterdruckbremskraftverstärker mit einem Steuergerät offenbart, das zwei Drucksensoren mit zwei Luftführungskanälen trägt, die sich in die Unterdruckkammer und die Arbeitskammer des Unterdruckbremskraftverstärkers erstrecken. Das Steuergerät dient zur Steuerung des Unterdruckbremskraftverstärkers.

Aus der US 2001/0002767 A1 ist ein Verfahren zur Ermittlung oder Kalibrierung der Aussteuerungskennlinie eines Unterdruckbremskraftverstärkers einer Fahrzeugbremsanlage bekannt, wobei der Druck in der Arbeitskammer oder der Druckunterschied zwischen der Arbeitskammer und der Unterdruckkammer des Unterdruckbremskraftverstärkers ermittelt wird und auf Grundlage des ermittelten Drucks oder Druckunterschieds des Unterdruckbremskraftverstärkers die Aussteuerungskennlinie ermittelt wird.

Aufgabe der Erfindung ist es, ein Verfahren anzugeben, mittels der eine Kennlinie eines Unterdruckbremskraftverstärkers und ein Aussteuerpunkt sicher und genau ermittelbar sind.

Die Aufgabe wird erfindungsgemäß gelöst durch ein Verfahren mit den Merkmalen des unabhängigen Patentanspruchs.

Besonders vorteilhafte Weiterbildungen und Ausgestaltungen des erfindungsgemäßen Verfahrens sind in den abhängigen Unteransprüchen angegeben.

Die dem erfindungsgemäßen Verfahren zugrunde liegende Aufgabe wird durch ein Verfahren zur Ermittlung oder Kalibrierung der Aussteuerungskennlinie eines Unterdruckbremskraftverstärkers einer Fahrzeugbremsanlage gelöst, wobei die Aussteuerungskennlinie dann ermittelt wird oder die gespeicherte Aussteuerungskennlinie nach Maßgabe des ermittelten Drucks oder Druckunterschieds dann verändert bzw. korrigiert wird, wenn die Geschwindigkeit einer Betätigung einer Bremsbetätigungseinrichtung, insbesondere eines Bremspedals, kleiner 40 bis 60 bar/sec, vorzugsweise kleiner ca. 50 bar/sec, ist.

Durch Ermittlung des Drucks in der Arbeitskammer oder des Druckunterschieds zwischen der Arbeitskammer und der Unterdruckkammer des Unterdruckbremskraftverstärkers ist es möglich, eine Aussteuerungskennlinie des Unterdruckbremskraftverstärkers relativ genau zu ermitteln oder eine vorgegebene bzw. eine aktuelle, gespeicherte Aussteuerungskennlinie an die ermittelten Werte anzupassen oder zu verändern. Anschließend kann während einer Bremsung des Fahrzeugs sicher festgestellt werden, wann der Aussteuerpunkt erreicht ist und eine entsprechende Bremsenregelung durchgeführt werden muss.

Der Druckunterschied zwischen der Arbeitskammer und der Unterdruckkammer des Unterdruckbremskraftverstärkers bestimmt die aktuell eingestellte pneumatische Bremskraftunterstützung. Der Druckunterschied kann bestimmt werden aus der Differenz eines gemessenen Drucks bzw. Vakuums in der Arbeitskammer und der Vakuumkammer. Daher wird vorzugsweise der Druck in der Arbeitskammer und der Unterdruckkammer des Unterdruckbremskraftverstärkers gemessen.

Erfindungsgemäß ist es vorgesehen, dass ein hydraulischer Druck in der Fahrzeugbremsanlage, insbesondere in einem Hauptbremszylinder ermittelt, wird und dass die Aussteuerungskennlinie auf Grundlage des ermittelten Drucks oder Druckunterschieds des Unterdruckbremskraftverstärkers und des ermittelten hydraulischen Drucks ermittelt wird oder eine vorgegebene oder gespeicherte Aussteuerungskennlinie nach Maßgabe des ermittelten Drucks oder Druckunterschieds des Unterdruckbremskraftverstärkers und des ermittelten hydraulischen Drucks verändert wird.

Dem ermittelten Druck oder Druckunterschied des Unterdruckbremskraftverstärkers wird ein ermittelter hydraulischer Druck, insbesondere ein Druck im Hauptbremszylinder, zugeordnet. Diese Zuordnung entspricht dem Zusammenhang zwischen dem Druck in der Vakuumkammer und dem Aussteuerdruck. Aus diesen Wertepaaren kann direkt eine Aussteuerungskennlinie durch Interpolation oder Extrapolation bestimmt werden. Vorzugsweise wird die Kennlinie aus mehreren Wertepaaren oder "Stützstellen" ermittelt.

Der hydraulische Druck wird vorzugsweise mit einem bereits im Fahrzeug vorhandenen Drucksensor gemessen, wie er z.B. bei Bremssystemen mit einer Fahrdynamikregelung (ESP) vorhanden ist.

Nach der Erfindung ist es vorgesehen, dass eine erste Aussteuerungskennlinie vorgegeben wird und diese vorgegebene erste Aussteuerungskennlinie nach Maßgabe des ermittelten Drucks oder Druckunterschieds des Unterdruckbremskraftverstärkers und des ermittelten verändert bzw. korrigiert wird.

Der Aussteuerdruck kann schon vor der ersten durch den Fahrer.ausgeführten Bremsenbetätigung ermittelt und abgelegt werden, indem der Druck in der Vakuumkammer gemessen wird und anhand der "Grundkennlinie" ein korrespondierender Aussteuerdruck festgelegt wird.

In der "Grundkennlinie" sind noch nicht sämtliche Toleranzen der beteiligten Bauteile des Bremskraftverstärkers, Hauptbremszylinders und der Sensoren berücksichtigt. Diese Toleranzen werden erfindungsgemäß Online, d.h. während der Fahrt des Fahrzeugs, insbesondere während einer Bremsung, "gelernt" und die vorgegebene oder aktuell gespeicherte Aussteuerungskennlinie nach Maßgabe der ermittelten Abweichungen entsprechend angepasst bzw. korrigiert.

Es ist demnach vorgesehen, dass eine vorgegebene Aussteuerungskennlinie zumindest einmal an systembedingte Toleranzen angepasst wird, um Abweichungen zwischen der "wahren", d.h. der tatsächlich vorhandenen, Kennlinie und der vorgegebenen Kennlinie zu minimieren. Die erste Bremsung des Fahrzeugs wird vorteilhaft noch beim Fahrzeughersteller vorgenommen. Dann kann eine erste Korrektur der Grundkennlinie erfolgen, wodurch für den Endkunden des Fahrzeugs bereits die Regelung und das Pedalgefühl optimiert ist. Spätere, weitere Anpassungen sind nach der ersten Korrektur für den Fahrer dann in der Regel kaum oder gar nicht mehr wahrnehmbar.

Es ist weiter vorgesehen, dass auch nach einer einmal erfolgten Anpassung diese angepasste oder veränderte Aussteuerungskennlinie gespeichert wird und ebenfalls nach Maßgabe weiterer ermittelter Abweichungen entsprechend korrigiert wird. Dadurch kann die aktuelle, gespeicherte Kennlinie der "wahren" Aussteuerungskennlinie immer stärker angenähert werden. Darüber hinaus werden so auch Veränderung des Systems im Laufe der Zeit, wie sich einstellende Abnutzungen, mitberücksichtigt. Die aktuelle Aussteuerungskennlinie wird vorzugsweise in einem über einen Zündungslauf des Antriebsmotors beständigen Speicher, wie ein EPROM, abgelegt.

Die Ermittlung erfolgt vorzugsweise durch die Auswertung von Wertepaaren bei vorgegebenen "Stützstellen", indem bei jeder Bremsung oder aber bei einer bestimmten Anzahl von Bremsungen überwacht wird, ob sich eine der ausgewählten Stützstelle entsprechende Druckdifferenz bzw. ein entsprechender Druck einstellt und indem gleichzeitig der hydraulische Druck gemessen und gespeichert wird. Die Auswahl und Einteilung der Stützstellen kann in festen Schritten erfolgen oder in Abhängigkeit von der aktuellen Betätigung. Vorzugsweise werden bei den einzelnen Stützstellen auch die zugehörigen Gradienten des hydraulischen Drucks mit abgespeichert. Diese ergeben sich insbesondere aus der Geschwindigkeit der Betätigung des Bremspedals durch den Fahrer und dienen als Kriterium für die Güte der Messung. Spätere Messungen an den Stützstellen werden dann nur berücksichtigt, wenn der dabei auftretende Druckgradient kleiner ist als der zuletzt gespeicherte.

Es ist erfindungsgemäß vorgesehen, dass die Aussteuerungskennlinie dann ermittelt wird oder die gespeicherte Aussteuerungskennlinie nach Maßgabe des ermittelten Drucks oder Druckunterschieds dann verändert bzw. korrigiert wird, wenn der Gradient des hydraulischen Drucks kleiner 40 bis 60 bar/sec, vorzugsweise kleiner ca. 50 bar/sec, ist. In der Regel liegen die Geschwindigkeiten der Bremsbetätigung in einem derartigen Bereich, dass der Gradient des hydraulischen Drucks unterhalb dieses Grenzwerts liegt. Liegt der Gradient unterhalb von ca. 40 bar/sec, dann können die Messungen zu verschiedenen Zeiten bzw. Bremsungen als gleichwertig angesehen werden. Eine Bremsung mit einem derartigen Gradienten kann als quasistationär angesehen werden.

Nach der Erfindung ist es vorgesehen, dass eine Aussteuerungskennlinie auch durch Extrapolation gemessener Werte ermittelt bzw. korrigiert wird. Denn über den von Fahrer eingesteuerten Druck hinaus verlaufen die Aussteuerungskennlinien grundsätzlich ähnlich, so dass eine Extrapolation sinnvoll möglich ist. Daher werden Messungen, die nicht den ganzen Bereich einer Kennlinie abdecken, weil z.B. nicht genügend Vakuum vorhanden ist oder keine entsprechende Bremsenbetätigung vorlag, berücksichtigt und auf noch fehlende Messwerte wird die Differenz vom letzten gültigen Messwert zum Wert der gespeicherten oder vorgegebenen Kennlinie addiert. Dadurch werden auch Stützstellen, die seltener erreicht werden oder nur mit hohen Druckgradienten gemessen wurden, der realen Kennlinie angenähert.

Dabei ist es vorgesehen, dass eine "endgültige" Anpassung oder Korrektur der Aussteuerungskennlinie erst dann vorgenommen wird, wenn ein bestimmter, relativ hoher hydraulischer Druck bereits erreicht wurde, welcher eine Annäherung an den Aussteuerpunkt entspricht. Nach dem Verfahren kann die Kennlinie aber auch vor Erreichen eines hohen hydraulischen Drucks zumindest vorübergehend angepasst werden. Alternativ oder zusätzlich kann auch das Erreichen eines relativ hohen Drucks in der Arbeitskammer, der einem Druck der umgebenden Atmosphäre entspricht, als Hinweis für eine Annäherung an den Aussteuerpunkt gewertet werden.

Nach der Erfindung ist es vorgesehen, dass ein Messwert berücksichtig wird, wenn die folgenden Bedingungen erfüllt sind:
a) der Gradient des hydraulischen Drucks ist geringer als 60 bar/sec, vorzugsweise kleiner als 50 bar/sec,
b) der Gradient des hydraulischen Drucks ist größer Null,
c) der aktuelle Gradient des hydraulischen Drucks ist kleiner als der Gradient bei der Ermittlung der gültigen (aktuellen) Aussteuerungskennlinie,
d) es erfolgt kein aktiver Bremseneingriff einer elektronischen Bremsenregelegung, wie Antiblockiersystem (ABS), Fahrdynamikregelung (ESP), Antriebsschlupfregelung (TCS), Bremsassistent (HBA) oder Abstands- und Folgeregelung (ACC),
e) es ist ausreichend Unterdruck für vorhanden, d.h. der Unterdruck in der Vakuumkammer beträgt kleiner 50 mbar, vorzugsweise kleiner 100 mbar,
f) die Stützstelle ist hinreichend genau getroffen, d.h. die Abweichung des ermittelten Druckunterschieds zwischen Arbeitskammer und Vakuumkammer von der vorgegebenen Stützstelle ist kleiner ± 50 mbar, vorzugsweise kleiner ± 40 mbar, und
g) die Änderung gegenüber dem vorherigen oder vorgegebenen Messwert ist hinreichend groß, insbesondere größer 1,2 bar, vorzugsweise größer 1,0 bar.

Erfindungsgemäß ist es vorgesehen, dass die Ermittlung und/oder Anpassung der Aussteuerungskennlinie das Erkennen eines Erfordernisses einer zusätzlichen Bremsunterstützung mitumfasst und dass eine aktive hydraulische Bremskraftunterstützung nur im Bedarfsfall aktiviert wird, wenn das Erfordernis einer zusätzlichen Bremsunterstützung für den Fahrer erkannt wurde.

Es ist erfindungsgemäß vorgesehen, dass die Ermittlung und/oder Anpassung der Aussteuerungskennlinie das Erkennen eines Erreichens des Aussteuerpunkts oder zumindest einer Annäherung an den Aussteuerpunkt mitumfasst und dass die aktive hydraulische Bremskraftunterstützung nur dann aktiviert wird, wenn das Erreichen des Aussteuerpunkts oder zumindest die Annäherung an den Aussteuerpunkt erkannt wurde.

Es ist erfindungsgemäß vorgesehen, dass die Verstärkungskraft des Unterdruckbremskraftverstärkers und/oder der hydraulischen Bremskraftunterstützung einstellbar ist nach Maßgabe von weiteren Funktionen des Bremsenregelungssytems, wie Bremsassistenten (BA) oder Fahrdynamikregelung (ESP).

Die Aufgabe nach der Erfindung wird auch durch eine Kalibriereinrichtung für die Kennlinie eines Unterdruckbremskraftverstärkers einer Fahrzeugbremsanlage gelöst, mit einem Unterdruckgehäuse, das durch mindestens eine bewegliche Trennwand in mindestens eine Unterdruckkammer und mindestens eine Arbeitskammer aufgeteilt ist und mit einer Sensoreinheit zur Sensierung von Drücken in dem Unterdruckbremskraftverstärker, bei der die Sensoreinheit dafür vorgesehen ist, den Druck in der Unterdruckkammer und den Druck in der Arbeitskammer oder den Druckunterschied zwischen der Arbeitskammer und der Unterdruckkammer zu sensieren und der Kalibriereinrichtung zuzuführen, und dass die Kalibriereinrichtung eine Auswerteeinheit aufweist, zwecks Auswertung des ermittelten Drucks oder Druckunterschieds und Ermittlung einer Aussteuerungskennlinie oder Anpassung einer gespeicherten Aussteuerungskennlinie nach Maßgabe der gemessenen Drücke oder Druckunterschiede.

Erfindungsgemäß ist es vorgesehen, dass bei mehreren Bremsungen des Fahrzeugs der ermittelte Druck oder Druckunterschied ausgewertet wird und daraus eine Aussteuerungskennlinie ermittelt oder eine gespeicherte Aussteuerungskennlinie angepasst wird nach Maßgabe der

Die Erfindung wird anhand von Abbildungen (Fig.1 bis Fig.2) beispielhaft näher erläutert. Es zeigen:
- Fig.1: eine schematische Darstellung einer Bremsbetätigungsvorrichtung mit Kalibriereinrichtung,
- Fig.2: eine schematische Darstellung einer ermittelten Kalibrierungskennlinie, und
- Fig.3: eine schematische Darstellung ermittelten Aussteuerungskennlinie aus der Kalibrierungskennlinie.

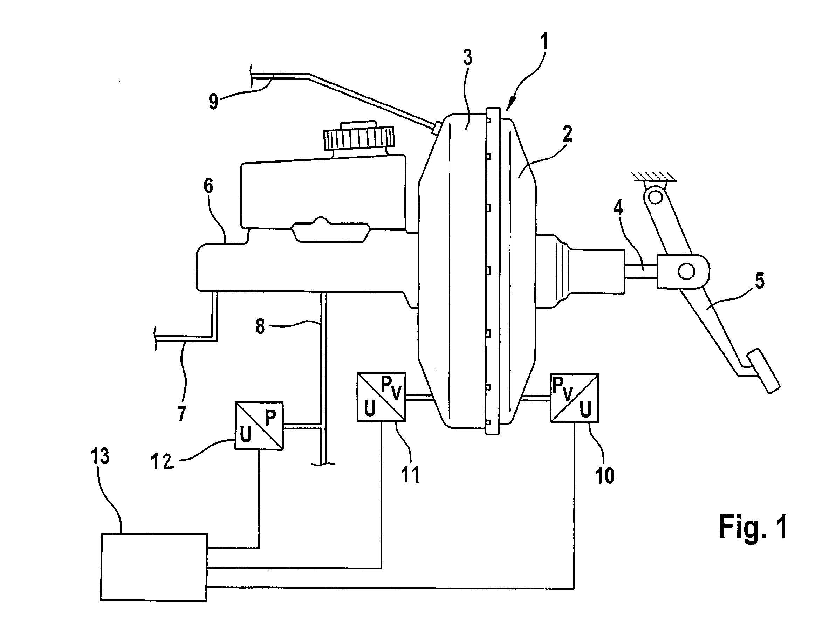

In den Fig.1 ist eine Bremsbetätigungsvorrichtung mit einer Kalibriereinrichtung nach der Erfindung dargestellt. Die Bremsbetätigungsvorrichtung weist einen Unterdruckbremskraftverstärker 1 auf, der in mindestens eine Arbeitskammer 2 und eine Vakuumkammer 3 aufgeteilt ist. Der Unterdruckbremskraftverstärker ist durch eine Betätigungsstange 4 über ein Bremspedal 5 betätigbar, wodurch ein an den Unterdruckbremskraftverstärker 1 anschließender Tandemhauptbremszylinder 6 betätigt wird. Der Tandemhauptbremszylinder 6 weist hydraulische Anschlüsse 7,8 auf, die mit den Radbremsen des Fahrzeugs verbunden sind. Die Unterdruckkammer 3 ist über einen Anschluss 9 durch eine kontinuierlich arbeitende, nicht dargestellte Unterdruckquelle oder Vakuumquelle verbunden.

Der Kalibriereinrichtung sind Sensoren 10,11 zugeordnet. Mit Hilfe des ersten Sensors 10 wird der (Vakuum)-Druck in der Arbeitskammer 2 und durch den zweiten Sensor 11 der (Vakuum)-Druck in der Unterdruckkammer 3 gemessen. Der hydraulische Druck des Tandemhauptbremszylinders 6 wird zumindest für einen Bremskreis durch einen hydraulischen Drucksensor 12 ermittelt.

Wird das Pedal 5 betätigt und somit die Stange 4 verschoben, so wird ein Ventil im Innern des Unterdruckbremskraftverstärkers 1 betätigt und es wird zuerst eine Verbindung zwischen Unterdruckkammer 3 und Arbeitskammer 2 getrennt. Im weiteren Verlauf der Bewegung wird eine Verbindung zur Außenluft durch das Ventil geöffnet. Der Unterdruck beginnt die durch das Bremspedal 5 eingeleitete Kraft zu verstärken. Durch einen sich aufbauenden hydraulischen Druck in dem Hauptbremszylinder 6 werden die Radbremsen des Fahrzeugs mit Bremsdruck beaufschlagt.

Jede Änderung der Pedalkraft bewirkt eine Vergrößerung oder Verkleinerung der Druckdifferenz zwischen der Arbeitskammer 2 und der Vakuumkammer 3. Diese wird mittels der Sensoren 10,11 ermittelt. Auch der daraus resultierende hydraulische Druck wird durch den Sensor 12 ermittelt. Die gemessenen Werte werden in einer elektronischen Steuer- und Regeleinheit 13 ausgewertet. Der Zusammenhang zwischen dem hydraulischen Druck und dem Differenzdruck im Unterdruckbremskraftverstärker 1 wird gespeichert. Unter Berücksichtigung verschiedener Aussteuerungs-Situationen des Unterdruckbremskraftverstärkers 1 wird eine Kennlinie zur Kalibrierung der Aussteuerungskennlinie des Unterdruckbremskraftverstärkers 1 ermittelt.

Wird das Pedal weiter niedergedrückt, strömt Luft aus der Atmosphäre durch das Ventil in die Arbeitskammer 2. Die entstehende Druckdifferenz von Arbeitskammer 2 zur Unterdruckkammer 3 versucht, eine Trennwand zwischen Arbeitskammer 2 und Unterdruckkammer 3 zu verschieben, bis schließlich der Druck in der Arbeitskammer 2 dem Atmosphärendruck entspricht, während der Druck der Unterdruckkammer 3 einem aufgrund der angeschlossenen Unterdruckquelle erzeugten Unterdruck entspricht. Diese Situation entspricht einer Vollbremsstellung des Unterdruckbremskraftverstärkers. Die maximal mögliche Unterstützungskraft des Unterdruckbremskraftverstärkers ist gegeben; der Aussteuerpunkt ist erreicht. Eine weitere Erhöhung der Kraft ist nur durch eine noch größere Pedalkraft durch den Fahrer möglich.

Durch die Steuer- und Regeleinheit 13 wird der jeweilige Unterdruck in dem Unterdruckkammerverstärker und der jeweilige, korrespondierende hydraulische Aussteuerdruck ermittelt. Wird durch einen Vergleich mit der Kalibrierungsdkennlinie (Zusammenhang zwischen Druckunterschied zwischen den Kammern des Unterdruckbremskraftverstärkers und dem hydraulischen Aussteuerdruck) festgestellt, dass der aktuelle hydraulische Druck den maximal möglichen Unterstützungsdruck übersteigt, erzeugt die Steuer- und Regeleinheit 13 ein Ansteuersignal für eine aktive hydraulische Bremskraftunterstützung im Sinne eines Aufbaus eines zusätzlichen hydraulischen Drucks, z.B. durch Ansteuerung einer hydraulischen Pumpe.

In der Fig.1 sind die Sensoren 10,11 aus Gründen der Übersichtlichkeit als zwei getrennte Baueinheiten dargestellt. Bevorzugt ist aber die Ausführung mit zwei Sensorelementen in einem gemeinsamen Gehäuse. Ein derartiger "Doppel-Drucksensor" kann während der gesamten Prozesskette vom Hersteller der Sensoren über den Hersteller des Unterdruckbremskraftverstärkers 1 bis zum Fahrzeughersteller wie ein Sensor behandelt werden. Dadurch ergeben sich Kostenvorteile sowie Montagevorteile. Bei einer besonders bevorzugten Ausführungsform wird das Sensorgehäuse zumindest teilweise in das Unterdruckgehäuse des Unterdruckbremskraftverstärkers 1 integriert, wodurch der Platzbedarf im Motorraum verringert wird.

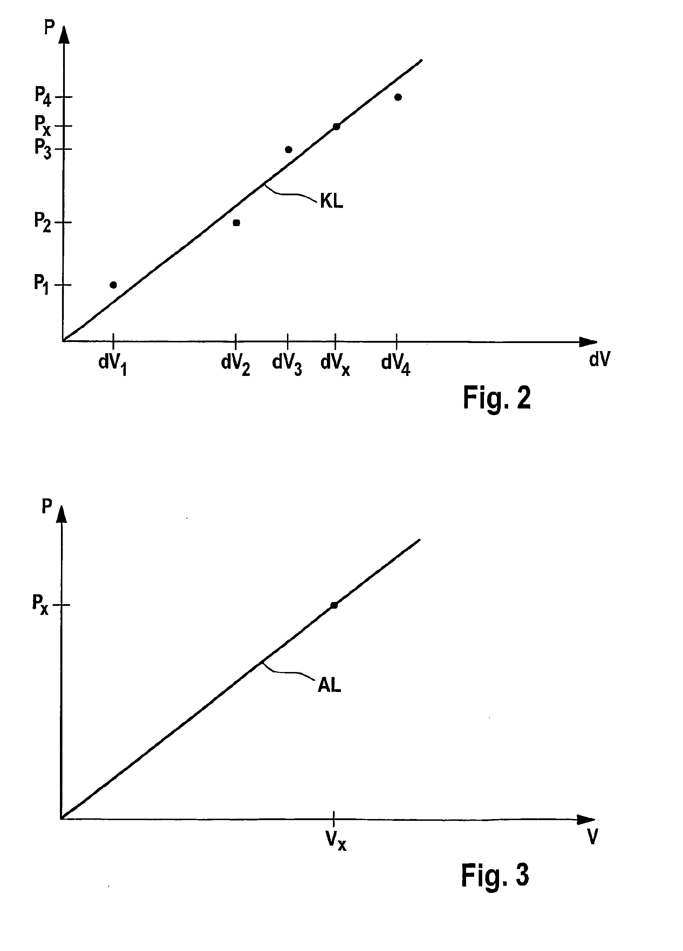

In der Fig.2 ist eine ermittelte Kalibrierungskennlinie Aussteuerungskennlinie, eine Auftragung des Bremsdrucks P gegen den Druckunterschied zwischen Vakuum- und Arbeitskammer dV schematisch dargestellt. Diese Kalibrierungs-Kennlinie wurde auf Grundlage von gemessenen Druckunterschieden dV im Bremskraftverstärker 1 und dem zugehörigen hydraulischen Druck P (Bremsdruck im THZ) ermittelt. Der durch die Sensoren 10,11 ermittelte Druckunterschied bestimmt die aktuell eingestellte Bremskraftunterstützung. Den Druckunterschieden dV₁ bis dV₄ werden die jeweils korrespondierenden, d.h. aktuell gemessenen, hydraulischen Drücke P₁ bis P₄ zugeordnet. Daraus ergibt sich eine über die Stützstellen (dV₁/P₁ ; dV₂/P₂; dV₃/P₃; dV₄/P₄) gemittelte Kalibrierungskennlinie KL (durchgezogene Linie). Eine weitere Steigerung des Bremsdrucks P ist ab diesem Punkten nur noch durch eine Erhöhung der vom Fahrer aufzubringenden Pedalkraft möglich.

Durch die ermittelte und gespeicherte Kennlinie der Kalibrierung nach Fig.2 kann der Aussteuerpunkt A mit einem zugehörigen Aussteuerdruck P_{A} einem Druck in der Vakuumkammer V zugeordnet werden. Fig.3 zeigt eine derartige Darstellung der Aussteuerungskennlinie AL aus der Kalibrierungskennlinie KL in Fig.2. Es kann mittels der Kalibrierungskennlinie KL so die Aussteuerungskennlinie AL kalibriert werden oder angepasst werden.

Der Kalibrierungskennlinie KL ist zu entnehmen, dass beispielsweise die Druckdifferenz dVx einem hydraulischen Aussteuerdruck Px entspricht. Bei einem gemessenen Vakuumdruck von Vx, welcher der Druckdifferenz entspricht (Vx = dVx), sollte ebenfalls der hydraulische Aussteuerdrruck Px anliegen (Fig. 3). Durch die "kalibrierte" Aussteuerungskennlinie AL ist so eine sichere und genaue Bestimmung des Aussteuerpunkts A möglich.

Wird dann der Aussteuerpunkt überschritten und fordert der Fahrer eine weitere bzw. stärkere Fahrzeugverzögerung, ist es vorgesehen, den Bremsdruck P mittels hydraulischer Verstärkung durch eine Pumpe zu erhöhen. Die hydraulische Verstärkung wird entsprechend dem Verstärkungsfaktor bzw. der Neigung der Aussteuerungskennlinie AL eingestellt bis zu einem maximal benötigten Bremsdruck. Da die ermittelte Kennlinie AL der "wahren" Kennlinie sehr gut angenähert ist oder dieser sogar entspricht, erfährt der Fahrer keine Veränderung der Charakteristik der Bremsensteuerung, wodurch sein Pedalgefühl gleich bleibt. Der Bedienkomfort für den Fahrer wird durch die Erfindung demnach erhöht.

## Patentansprüche

1. Verfahren zur Ermittlung oder Kalibrierung der Aussteuerungskennlinie eines Unterdruckbremskraftverstärkers einer Fahrzeugbremsanlage, wobei der Druck in der Arbeitskammer oder der Druckunterschied zwischen der Arbeitskammer und der Unterdruckkammer des Unterdruckbremskraftverstärkers ermittelt wird und auf Grundlage des ermittelten Drucks oder Druckunterschieds des Unterdruckbremskraftverstärkers die Aussteuerungskennlinie ermittelt wird oder eine vorgegebene oder gespeicherte Aussteuerungskennlinie nach Maßgabe des ermittelten Drucks oder Druckunterschieds verändert bzw. korrigiert wird, **dadurch gekennzeichnet, dass** die Aussteuerungskennlinie dann ermittelt wird oder die gespeicherte Aussteuerungskennlinie nach Maßgabe des ermittelten Drucks oder Druckunterschieds dann verändert bzw. korrigiert wird, wenn die Geschwindigkeit einer Betätigung einer Bremsbetätigungseinrichtung, insbesondere eines Bremspedals, kleiner 40 bis 60 bar/sec, vorzugsweise kleiner ca. 50 bar/sec, ist.

2. Verfahren nach Anspruch 1, **dadurch gekennzeichnet, dass** ein hydraulischer Druck in der Fahrzeugbremsanlage, insbesondere in einem Hauptbremszylinder ermittelt, wird und dass die Aussteuerungskennlinie auf Grundlage des ermittelten Drucks oder Druckunterschieds des Unterdruckbremskraftverstärkers und des ermittelten hydraulischen Drucks ermittelt wird oder eine vorgegebene oder gespeicherte Aussteuerungskennlinie nach Maßgabe des ermittelten Drucks oder Druckunterschieds des Unterdruckbremskraftverstärkers und des ermittelten hydraulischen Drucks verändert bzw. korrigiert wird.

3. Verfahren nach Anspruch 1 oder 2, **dadurch gekennzeichnet, dass** eine Aussteuerungskennlinie durch Extrapolation gemessener Werte ermittelt bzw. korrigiert wird.

4. Verfahren nach einem der Ansprüche 1 bis 3, **dadurch gekennzeichnet, dass** ein Messwert berücksichtig wird, wenn die folgenden Bedingungen erfüllt sind:
a) der Gradient des hydraulischen Drucks ist geringer als 50 bar/sec,
b) der Gradient des hydraulischen Drucks ist größer Null,
c) der aktuelle Gradient des hydraulischen Drucks ist kleiner als der Gradient bei der Ermittlung der gültigen Aussteuerungskennlinie,
d) es erfolgt kein aktiver Bremseneingriff einer elektronischen Bremsenregelegung, wie Antiblockiersystem (ABS), Fahrdynamikregelung (ESP), Antriebsschlupfregelung (TCS), Bremsassistent (HBA) oder Abstands- und Folgeregelung (ACC),
e) es ist ausreichend Unterdruck für vorhanden, d.h. der Unterdruck in der Vakuumkammer beträgt kleiner 50 mbar, vorzugsweise kleiner 100 mbar,
f) die Stützstelle ist hinreichend genau getroffen, d.h. die Abweichung des ermittelten Druckunterschieds zwischen Arbeitskammer und Vakuumkammer von der vorgegebenen Stützstelle ist kleiner ± 50 mbar, vorzugsweise kleiner ± 40 mbar, und
g) die Änderung gegenüber dem vorherigen oder vorgegebenen Messwert ist hinreichend groß, insbesondere größer 1,2 bar, vorzugsweise größer 1,0 bar..

5. Verfahren nach einem der Ansprüche 1 bis 4, **dadurch gekennzeichnet, dass** die Ermittlung und/oder Anpassung der Aussteuerungskennlinie das Erkennen eines Erfordernisses einer zusätzlichen Bremsunterstützung mit umfasst und dass eine aktive hydraulische Bremskraftunterstützung nur im Bedarfsfall aktiviert wird, wenn das Erfordernis einer zusätzlichen Bremsunterstützung für den Fahrer erkannt wurde.

6. Verfahren nach Anspruch 5, **dadurch gekennzeichnet, dass** die Ermittlung und/oder Anpassung der Aussteuerungskennlinie das Erkennen eines Erreichens des Aussteuerpunkts oder zumindest einer Annäherung an den Aussteuerpunkt mit umfasst und dass die aktive hydraulische Bremskraftunterstützung nur dann aktiviert wird, wenn das Erreichen des Aussteuerpunkts oder zumindest die Annäherung an den Aussteuerpunkt erkannt wurde.

7. Verfahren nach Anspruch 5 oder 6, **dadurch gekennzeichnet, dass** die Verstärkungskraft des Unterdruckbremskraftverstärkers und/oder der hydraulischen Bremskraftunterstützung einstellbar ist nach Maßgabe von weiteren Funktionen des Bremsenregelungssystems, wie Bremsassistenten (BA) oder Fahrdynamikregelung (ESP).

## Claims

1. Method for determining or calibrating the brake control characteristic curve of a vacuum brake booster of a vehicle brake system, wherein the pressure in the working chamber or the pressure difference between the working chamber and the vacuum chamber of the vacuum brake booster is determined, and the brake control characteristic curve is determined on the basis of the determined pressure or pressure difference of the vacuum brake booster, or a predetermined or stored brake control characteristic curve is modified or corrected according to the determined pressure or pressure difference,
**characterized in that** the brake control characteristic curve is determined or the stored brake control characteristic curve is modified or corrected according to the determined pressure or pressure difference when the speed of an actuation of a brake actuation device, in particular a brake pedal, is lower than 40 to 60 bar/sec, preferably lower than roughly 50 bar/sec.

2. Method as claimed in claim 1,
**characterized in that** a hydraulic pressure in the vehicle brake system, in particular in a master brake cylinder, is determined, and **in that** the brake control characteristic curve is determined on the basis of the determined pressure or pressure difference of the vacuum brake booster and the determined hydraulic pressure, or a predefined or stored brake control characteristic curve is modified or corrected according to the determined pressure or pressure difference of the vacuum brake booster and the determined hydraulic pressure.

3. Method as claimed in claim 1 or 2,
**characterized in that** a brake control characteristic curve is also determined or corrected by extrapolation of measured vales.

4. Method as claimed in any one of claims 1 to 3,
**characterized in that** a measured value is taken into consideration when the following conditions are satisfied:
a) The gradient of the hydraulic pressure is lower than 50 bar/sec,
b) the gradient of the hydraulic pressure exceeds zero,
c) the current gradient of the hydraulic pressure is lower than the gradient when determining the valid brake control characteristic curve,
d) there is no active braking intervention of an electronic brake control, such as anti-lock system (ABS), driving dynamics control (ESP), traction slip control (TCS), brake assist (HBA), or automatic cruise control (ACC),
e) vacuum is sufficient, i.e. the vacuum in the vacuum chamber is lower than 50 mbar, preferably lower than 100 mbar,
f) the reference point is sufficiently precise, that means the discrepancy of the determined pressure difference between working chamber and vacuum chamber from the predefined reference point is lower than ± 50 mbar, preferably lower than ± 40 mbar, and
g) the change with respect to the previous or predefined measured value is of a sufficient rate, in particular higher than 1.2 bar, preferably higher than 1.0 bar.

5. Method as claimed in any one of claims 1 to 4,
**characterized in that** the determination and/or adaptation of the brake control characteristic curve also comprises detecting a requirement of an additional brake boost, and **in that** an active hydraulic brake boost is activated only in case of need, when the requirement of an additional brake boost for the driver was detected.

6. Method as claimed in claim 5,
**characterized in that** the determination and/or adaptation of the brake control characteristic curve also comprises detecting that the point of maximum boosting is reached or at least an approximation of the point of maximum boosting, and **in that** the active hydraulic brake boost is activated only if the reaching of the point of maximum boosting or at least the approximation of the point of maximum boosting was detected.

7. Method as claimed in claim 5 or 6,
**characterized in that** the boosting force of the vacuum brake booster and/or of the hydraulic brake boost is adjustable according to further functions of the brake control system such as brake assist (BA) or driving dynamics control (ESP).

## Revendications

1. Procédé pour déterminer ou étalonner la courbe caractéristique de réglage d'un servofrein à dépression d'un système de freinage de véhicule, dans lequel la pression dans la chambre de travail ou la différence de pression entre la chambre de travail et la chambre sous dépression du servofrein à dépression est déterminée, et la courbe caractéristique de réglage est déterminée sur la base de la pression ou différence de pression déterminée du servofrein à dépression, ou une courbe caractéristique de réglage prédéfinie ou mémorisée est modifiée ou corrigée en fonction de la pression ou différence de pression déterminée, **caractérisé en ce que** la courbe caractéristique de réglage est déterminée ou la courbe caractéristique de réglage mémorisée est modifiée ou corrigée en fonction de la pression ou différence de pression déterminée, lorsque la vitesse d'un actionnement d'un dispositif d'actionnement de frein, en particulier d'une pédale de frein, est inférieure à 40 à 60 bars/seconde, de préférence inférieure à environ 50 bars/seconde.

2. Procédé selon la revendication 1, **caractérisé en ce qu'**une pression hydraulique est déterminée dans le système de freinage de véhicule, en particulier dans un cylindre de frein principal, et **en ce que** la courbe caractéristique de réglage est déterminée sur la base de la pression ou différence de pression déterminée du servofrein à dépression et de la pression hydraulique déterminée, ou une courbe caractéristique de réglage prédéfinie ou mémorisée est modifiée ou corrigée en fonction de la pression ou différence de pression déterminée du servofrein à dépression et de la pression hydraulique déterminée.

3. Procédé selon l'une quelconque des revendications 1 ou 2, **caractérisé en ce qu'**une courbe caractéristique de réglage est déterminée ou corrigée par extrapolation de valeurs mesurées.

4. Procédé selon l'une quelconque des revendications 1 à 3, **caractérisé en ce qu'**une valeur de mesure est prise en compte lorsque sont réunies les conditions suivantes :
a) le gradient de la pression hydraulique est inférieur à 50 bars/seconde,
b) le gradient de la pression hydraulique est supérieur à zéro,
c) le gradient actuel de la pression hydraulique est inférieur au gradient lors de la détermination de la courbe caractéristique de réglage valable,
d) il ne se produit aucune intervention active des freins d'une régulation électronique des freins, telle qu'un système d'antiblocage (ABS), une régulation de la dynamique de conduite (ESP), une régulation du patinage à l'accélération (TCF), une assistance au freinage (HBA) ou une régulation de distance et de poursuite (ACC),
e) il règne une dépression suffisante, c'est-à-dire que la dépression dans la chambre sous vide est inférieure à 50 mbars, de préférence inférieure à 100 mbars,
f) le point d'assistance est suffisamment précis, c'est-à-dire que l'écart de la différence de pression déterminée entre la chambre de travail et la chambre sous vide du point d'assistance prédéfini est inférieur à ± 50 mbars, de préférence inférieur à ± 40 mbars et,
g) la variation par rapport à la valeur de mesure précédente ou prédéfinie est suffisamment grande, en particulier supérieure à 1,2 bar, de préférence supérieure à 1,0 bar.

5. Procédé selon l'une quelconque des revendications 1 à 4, **caractérisé en ce que** la détermination et/ou l'adaptation de la courbe caractéristique de réglage comprend aussi la reconnaissance de l'exigence d'une assistance de freinage supplémentaire, et **en ce qu'**un soutien hydraulique actif de la force de freinage n'est activé en cas de besoin que si l'exigence d'une assistance supplémentaire au freinage pour le conducteur a été reconnue.

6. Procédé selon la revendication 5, **caractérisé en ce que** la détermination et/ou l'adaptation de la courbe caractéristique de réglage comprend la reconnaissance que le point de réglage a été atteint ou au moins une approche du point de réglage, et **en ce que** le soutien hydraulique actif de la force de freinage n'est activé que s'il est reconnu que le point de réglage a été atteint ou au moins l'approche du point de réglage.

7. Procédé selon l'une quelconque des revendications 5 ou 6, **caractérisé en ce que** la force d'amplification du servofrein à dépression et/ou du soutien hydraulique de la force de freinage est réglable en fonction d'autres fonctions du système de régulation des freins, telles que l'assistance au freinage (BA) ou la régulation de la dynamique de conduite (ESP).
